(19) **Europäisches Patentamt**

**European Patent Office**

**Office européen des brevets**

(11) **EP 1 215 891 A1**

(12) **DEMANDE DE BREVET EUROPEEN**

(43) Date de publication:
**19.06.2002 Bulletin 2002/25**

(51) Int Cl.7: **H04N 3/15**

(21) Numéro de dépôt: **01403217.1**

(22) Date de dépôt: **12.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **14.12.2000 FR 0016316**

(71) Demandeur: **COMMISSARIAT A L'ENERGIE ATOMIQUE**
**75015 Paris Cédex 15 (FR)**

(72) Inventeurs:
- **Pantigny, Philippe**
  **38640 Claix (FR)**
- **LaFlaquiere, Arnaud**
  **38000 Grenoble (FR)**
- **Rothan, Frédéric**
  **38170 Syssinet (FR)**

(74) Mandataire: **Poulin, Gérard**
**BREVALEX**
**3, rue du Docteur Lancereaux**
**75008 Paris (FR)**

(54) **Circuit de lecture de charges a préamplification adaptive et procédé de lecture des charges a préamplification adaptive**

(57) L'invention concerne un circuit de lecture de charges comprenant un moyen capacitif (C1, C2), de capacité $C_a$, pour stocker des charges et des moyens pour lire une tension prélevée aux bornes du moyen capacitif. Le moyen capacitif est constitué d'un premier moyen capacitif (C1) et d'un deuxième moyen capacitif (C2) de capacité $C_b$ inférieure à $C_a$. Le circuit de lecture comprend des moyens de comparaison (COMP) pour comparer la tension lue aux bornes du moyen capacitif à une valeur de seuil ($V_{seuil}$) et des moyens pour commander le transfert des charges stockées dans le premier moyen capacitif vers le deuxième moyen capacitif lorsque la tension lue franchit la valeur de seuil ($V_{seuil}$).

L'invention s'applique à la détection de rayonnement dans le domaine de l'imagerie.

FIG. 2

**EP 1 215 891 A1**

## Description

Domaine technique et art antérieur

La présente invention concerne un circuit de lecture de charges ainsi qu'un procédé de lecture de charges.

L'invention concerne également un circuit détecteur de rayonnement.

Selon l'art connu, un circuit détecteur de rayonnement comprend un ensemble de détecteurs élémentaires pour convertir en charges électriques le rayonnement détecté et un circuit de lecture des charges détectées.

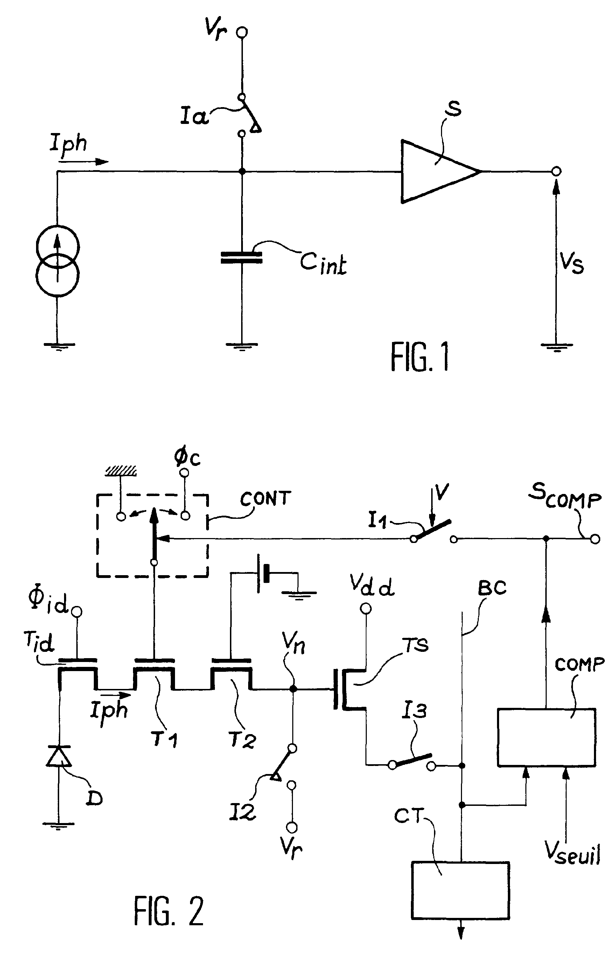

Le circuit de lecture des charges détectées comprend, pour chaque détecteur élémentaire, un circuit intégrateur élémentaire de type suiveur commuté. Un circuit intégrateur élémentaire est représenté en figure 1. Il comprend un condensateur d'intégration $C_{int}$, un interrupteur $I_a$ et un circuit suiveur S. Les charges détectées constituent un courant Iph qui est intégré dans le condensateur $C_{int}$. L'interrupteur $I_a$ permet de réinitialiser le potentiel du noeud de lecture par application d'une tension de réinitialisation $V_r$. Le circuit suiveur S délivre une variation de tension $V_s$ proportionnelle au courant Iph.

Le courant photonique maximum admissible $Iph_{max}$, le temps Ti d'intégration des charges dans le condensateur $C_{int}$ et le condensateur d'intégration $C_{int}$ vérifient la relation :

$$Iph_{max} \times Ti \leq \frac{\Delta V_{S\,max}}{G} \times C_{int}$$

où $\Delta V_{Smax}$ est l'excursion de tension maximale en sortie du suiveur S et G le gain en tension du suiveur. Dans la suite de la description, le gain G sera pris égal à 1 qui est la valeur théorique du gain d'un suiveur de tension.

De même le courant photonique minimum admissible $Iph_{min}$ dû à la charge photonique de bruit (bruit de lecture) vérifie la relation :

$$\sqrt{q \times IPh_{min} \times Ti} = C_{int} \times < Vb - pel >$$

où q est la charge de l'électron et <Vb-pel> est le bruit rms ramené à l'entrée du suiveur.

Ces deux relations peuvent être combinées pour obtenir l'excursion d'entrée en courant du circuit intégrateur élémentaire :

$$\frac{Iph_{min}}{Iph_{max}} = \frac{1}{q \times \Delta V_{S\,max}} \times C_{int} \times < Vb - pel >^2 .$$

A titre d'exemple, pour $\Delta V_{Smax}$ sensiblement égal à 2 volts, $C_{int}$ sensiblement égal à 1pF et <Vb-pel> sensiblement égal à 100μV-rms, l'excursion d'entrée est sensiblement égale à 1/32, sachant que le rapport signal sur bruit de la photodiode est dégradé de $\sqrt{2}$ sous éclairement minimal.

Certaines applications s'accommodent de ces performances. D'autres applications cependant nécessitent d'augmenter l'excursion d'entrée du point élémentaire afin de permettre une dynamique d'éclairement plus importante, par exemple pour résoudre les problèmes d'éblouissement ou de scènes à fort contraste.

L'invention permet de répondre avantageusement à ce besoin.

Exposé de l'invention

En effet, l'invention concerne un circuit de lecture de charges comprenant un moyen capacitif de capacité $C_a$ pour stocker des charges et des moyens pour lire une tension prélevée aux bornes du moyen capacitif. Le moyen capacitif est constitué d'un premier moyen capacitif et d'un deuxième moyen capacitif de capacité $C_b$ inférieure à $C_a$. Le circuit de lecture comprend des moyens de comparaison pour comparer la tension lue aux bornes du moyen capacitif à une valeur de seuil, des moyens pour commander le transfert des charges stockées dans le premier moyen capacitif vers le deuxième moyen capacitif de capacité $C_b$ inférieure à $C_a$ lorsque la tension lue aux bornes du moyen capacitif franchit la valeur de seuil et des moyens pour lire une tension prélevée aux bornes du deuxième moyen capacitif.

L'invention concerne également un procédé de lecture de charges comprenant une étape d'intégration de charges dans un moyen capacitif de capacité $C_a$ et une étape de lecture d'une tension aux bornes du moyen capacitif. Le moyen capacitif est constitué d'un premier moyen capacitif et d'un deuxième moyen capacitif de capacité $C_b$ inférieure à $C_a$. Le procédé comprend, successivement, une étape de comparaison de la tension lue aux bornes du moyen capacitif avec une tension de seuil, une étape de transfert des charges stockées dans le premier moyen capacitif vers le deuxième moyen capacitif de capacité $C_b$ inférieure à $C_a$ lorsque la tension lue aux bornes du moyen capacitif franchit la valeur de seuil, et une étape de lecture d'une tension aux bornes du deuxième moyen capacitif.

L'invention concerne encore un circuit détecteur de rayonnement comprenant au moins un photodétecteur pour convertir en charges électriques un rayonnement détecté et un circuit de lecture des charges électriques. Le circuit de lecture des charges électriques est un circuit de lecture de charges selon l'invention.

Brève description des figures

D'autres caractéristiques et avantages de l'invention apparaîtront à la lecture d'un mode de réalisation préférentiel de l'invention fait en référence aux figures ci-annexées parmi lesquelles :

- la figure 1 représente un circuit intégrateur élémentaire de type suiveur selon l'art antérieur,
- la figure 2 représente un circuit intégrateur élémentaire de type suiveur selon un premier mode de réalisation de l'invention,
- la figure 3 représente des chronogrammes relatifs au fonctionnement du circuit intégrateur de type suiveur de la figure 2,
- la figure 4 représente un circuit intégrateur élémentaire de type suiveur selon un deuxième mode de réalisation de l'invention,
- la figure 5 représente un circuit intégrateur élémentaire de type suiveur selon un troisième mode de réalisation de l'invention.

Sur toutes les figures, les mêmes repères désignent le mêmes éléments.

Description détaillée de modes de mise en oeuvre de l'invention

La figure 1 a été décrite précédemment, il est donc inutile d'y revenir.

La figure 2 représente un circuit intégrateur élémentaire de type suiveur selon un premier mode de réalisation de l'invention.

Le circuit intégrateur élémentaire comprend deux transistors de technologie MOS T1 et T2 (MOS pour « Métal Oxyde Semi-conducteur »), trois interrupteurs I1, I2, I3, un transistor TS monté en suiveur de tension, un comparateur COMP et un moyen de contrôle CONT. Le circuit intégrateur est connecté à un détecteur constitué d'une photodiode D et d'un transistor MOS d'injection directe $T_{id}$ commandé sur sa grille par une tension $\Phi_{id}$. Selon le premier mode de réalisation de l'invention, les deux transistors T1 et T2 sont montés en série. Le drain du transistor Tid attaque le canal des transistors T1 et T2. Le transistor TS a sa source reliée à un bus colonne BC par l'intermédiaire de l'interrupteur I3. Le bus colonne BC est relié à un circuit de traitement CT. L'interrupteur I2 permet de réinitialiser le potentiel $V_n$ du noeud de lecture à une tension de réinitialisation Vr. Le comparateur COMP a une première entrée reliée, par l'intermédiaire de l'interrupteur I3, à la sortie du transistor TS et une deuxième entrée reliée à une source de tension $V_{Seuil}$. La sortie du comparateur est reliée, via l'interrupteur I1, au moyen de contrôle CONT. L'interrupteur I1 est commandé par une tension V. Lorsque l'interrupteur I1 est fermé, le signal $S_{COMP}$ issu du comparateur est appliqué au moyen de contrôle CONT. Pendant la phase d'intégration, le moyen de contrôle CONT porte la grille du transistor T1 à un potentiel $\phi_c$. Le transistor T1 est alors polarisé en capacité d'intégration C1 et l'intégration des charges s'effectue également dans le transistor T2 qui est polarisé en capacité d'intégration C2. Les capacités C1 et C2 sont en parallèle.

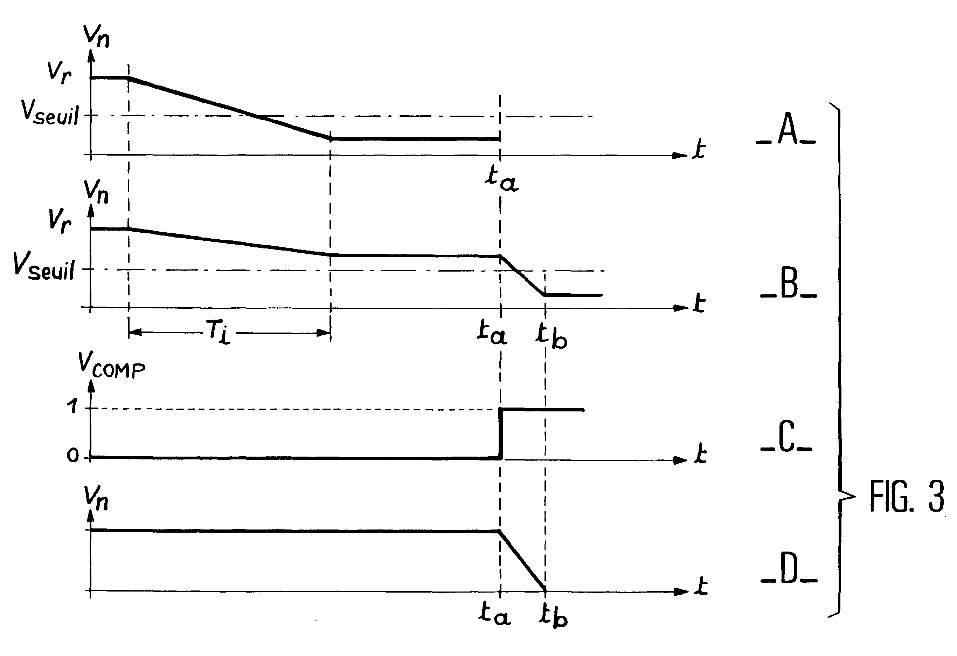

Le fonctionnement du circuit intégrateur élémentaire de la figure 2 va maintenant être décrit en liaison avec les chronogrammes de la figure 3. Il faut noter ici que le sens de variation des tensions des chronogrammes de la figure 3 peut également être inversé en fonction de la nature des charges que l'on transfère.

Le circuit intégrateur permet une intégration du courant dans le canal des transistors MOS T1 et T2 qui constituent les capacités C1 et C2. Le potentiel $V_n$ du noeud de lecture évolue en fonction du temps comme décrit sur la figure 3(A) ou la figure 3(B) selon que le courant détecté Iph est un fort courant ou un faible courant.

Par fort courant, il faut entendre un courant Iph tel qu'au bout du temps d'intégration Ti, la tension de sortie du suiveur TS est inférieure à la tension de seuil $V_{Seuil}$. De même, par faible courant, il faut entendre un courant Iph tel qu'au bout du temps d'intégration Ti, la tension de sortie du suiveur TS est supérieure à la tension de seuil $V_{Seuil}$.

Dans le premier cas (fort courant) la tension lue est alors directement la tension prise en sortie du suiveur TS, soit :

$$\Delta V_1 = Q_{ph}/(C1+C2)$$

où Qph = Iph x Ti et où C1 et C2 sont les capacités de canal respectives des transistors T1 et T2. La tension $\Delta V_1$ est alors échantillonnée et multiplexée vers la sortie vidéo.

Dans le deuxième cas (faible courant), le comparateur bascule à un instant ta (cf. figure 3(C)) et le signal qu'il délivre pilote le moyen de contrôle CONT de façon à appliquer un front descendant sur la grille de T1 (cf. figure 3(D)). Les charges stockées dans le canal de T1 sont alors injectées dans le canal de T2 entre les instants ta et tb. A la fin de ce transfert de charges, la variation de tension sur le noeud de lecture est :

$$\Delta V_2 = Q_{ph}/C2.$$

La réponse en tension du circuit élémentaire de lecture est donc avantageusement multipliée par le facteur

$$\frac{C_1 + C_2}{C_2}.$$

Dans la pratique, ce facteur est au moins égal à 5. Avantageusement, le bruit dû au transistor TS est divisé par ce même facteur. Ainsi, pour un bruit de suiveur donné, le bruit de lecture en charge est-il diminué, ce qui a pour conséquence une augmentation du rapport Iphmax/Iphmin.

Par ailleurs, le fait que la réponse en tension du circuit intégrateur augmente à bas courant permet, si cela s'avère nécessaire, de réduire les exigences sur le bruit d'entrée de la chaîne de multiplexage aval.

Par couplage capacitif avec le noeud de lecture, la commutation de l'interrupteur I3 perturbe l'information mémorisée sur les moyens capacitifs d'intégration. Ce couplage est toutefois minimum car l'entrée du circuit intégrateur est chargée par la somme des capacités C1 et C2 lors de l'adressage du circuit intégrateur (fermeture de l'interrupteur I3).

Le signal de comparaison $S_{COMP}$ délivré par le comparateur permet de connaître la capacité sur laquelle la mesure des charges a été réalisée. Le signal de comparaison $S_{COMP}$ couplé à la mesure de tension lue permet alors de calculer la valeur de la charge détectée par le détecteur D.

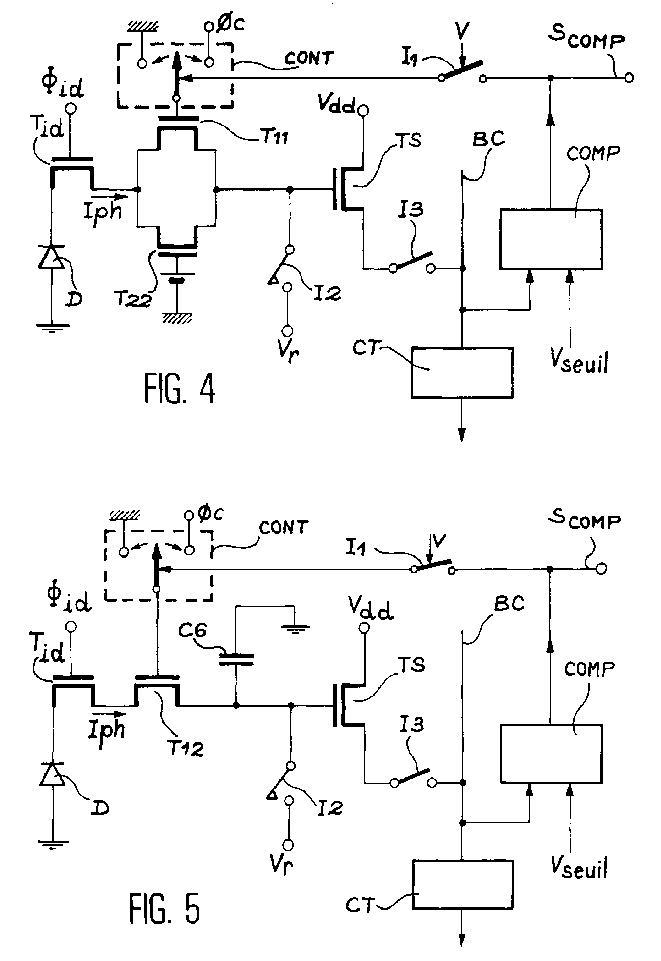

Selon le premier mode de réalisation de l'invention décrit ci-dessus, le circuit intégrateur comprend deux transistors MOS en série T1 et T2. D'autres modes de réalisation de l'invention sont également possibles, tels que les modes représentés aux figures 4 et 5.

Selon le mode représenté en figure 4, les moyens de stockage des charges détectées sont des capacités C3 et C4 montées en parallèle respectivement réalisées à l'aide des transistors MOS T11 et T22 montés en parallèle. Le moyen de contrôle CONT commande la grille du transistor T11 et le transistor T22 est polarisé en capacité d'intégration.

Selon encore un autre mode de réalisation de l'invention représenté en figure 5, les moyens de stockage des charges détectées sont des capacités C5 et C6 montées en parallèle respectivement réalisées à l'aide d'un transistor MOS T12 et d'un condensateur de valeur fixe. La grille du transistor T12 est commandée par le moyen de contrôle CONT.

Quel que soit le mode de réalisation, le circuit intégrateur selon l'invention peut être réalisé à l'aide de différentes technologies. La photodiode peut ainsi être connectée par billes, via un dispositif d'adaptation d'impédance, au canal d'intégration. Elle peut également être réalisée sur le circuit intégré de lecture (diode N ou P pour une détection dans le visible). Les transistors MOS peuvent être, par exemple, réalisés sur une même couche active (CMOS BULK ou SOI standard) ou bien sur différentes couches actives reportées l'une sur l'autre par des techniques de type adhésion moléculaire.

**Revendications**

1. Circuit de lecture de charges comprenant un moyen capacitif (C1, C2) de capacité $C_a$ pour stocker des charges et des moyens pour lire une tension prélevée aux bornes du moyen capacitif, **caractérisé en ce que** le moyen capacitif étant constitué d'un premier moyen capacitif (C1) et d'un deuxième moyen capacitif (C2) de capacité $C_b$ inférieure à $C_a$, il comprend des moyens de comparaison (COMP) pour comparer la tension lue aux bornes du moyen capacitif à une valeur de seuil ($V_{seuil}$), des moyens pour commander le transfert des charges stockées dans le premier moyen capacitif (C1) vers le deuxième moyen (C2) capacitif de capacité $C_b$ inférieure à $C_a$ lorsque la tension lue aux bornes du moyen capacitif franchit la valeur de seuil ($V_{seuil}$) et des moyens pour lire une tension prélevée aux bornes du deuxième moyen capacitif.

2. Circuit de lecture selon la revendication 1, **caractérisé en ce que** le moyen capacitif comprend un premier transistor MOS.

3. Circuit de lecture selon la revendication 2, **caractérisé en ce que** le moyen capacitif comprend un deuxième transistor MOS en série avec le premier transistor MOS, le deuxième transistor MOS constituant le deuxième moyen capacitif.

4. Circuit de lecture selon la revendication 2, **caractérisé en ce que** le moyen capacitif comprend un deuxième transistor MOS en parallèle avec le premier transistor MOS, le deuxième transistor MOS constituant le deuxième moyen capacitif.

5. Circuit de lecture selon la revendication 2, **caractérisé en ce que** le deuxième moyen capacitif est un condensateur de valeur fixe (C6).

6. Circuit de lecture selon l'une quelconque des revendications précédentes, **caractérisé en ce que** les moyens pour lire une tension prélevée aux bornes du moyen capacitif constituent les moyens pour lire une tension prélevée aux bornes du deuxième moyen capacitif.

7. Circuit de lecture selon l'une quelconque des revendications précédentes, **caractérisé en ce que** les moyens pour lire une tension prélevée aux bornes du moyen capacitif comprennent un suiveur de tension (TS).

8. Circuit détecteur de rayonnement comprenant au moins un photodétecteur (D) pour convertir en charges électriques un rayonnement détecté et un circuit de lecture des charges électriques, **caractérisé en ce que** le circuit de lecture des charges électriques est un circuit de lecture de charges selon l'une quelconque des revendications précédentes.

9. Procédé de lecture de charges comprenant une étape d'intégration de charges dans un moyen capacitif (C1, C2) de capacité $C_a$ et une étape de lecture d'une tension aux bornes du moyen capacitif, **caractérisé en ce que**, le moyen capacitif étant constitué d'un premier moyen capacitif (C1) et d'un deuxième moyen capacitif (C2) de capacité $C_b$ inférieure à $C_a$, il comprend, successivement, une étape de comparaison de la tension lue aux bornes du moyen capacitif avec une tension de seuil ($V_{seuil}$), une étape de transfert des charges stockées dans le premier moyen capacitif vers le deuxième moyen capacitif de capacité $C_b$ inférieure à $C_a$ lorsque la tension lue aux bornes du moyen capacitif franchit la valeur de seuil ($V_{seuil}$), et une étape de lecture d'une tension aux bornes du deuxième moyen capacitif.

**10.** Procédé de lecture de charges selon la revendication 9, **caractérisé en ce qu'**il comprend une étape pour mesurer la valeur des charges intégrées dans le moyen capacitif à partir d'une valeur de tension de comparaison issue de l'étape de comparaison et de la valeur de tension lue.

FIG. 1

FIG. 2

FIG. 3

FIG. 4

FIG. 5

**Office européen des brevets**

## RAPPORT DE RECHERCHE EUROPEENNE

Numéro de la demande

EP 01 40 3217

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 2 330 905 A (HEWLETT PACKARD CO) 5 mai 1999 (1999-05-05) * page 6, ligne 5 - ligne 11 * * page 8, ligne 4 - ligne 15 * --- | 1,9 | H04N3/15 |
| A | US 5 742 058 A (PANTIGNY PHILIPPE ET AL) 21 avril 1998 (1998-04-21) * colonne 10, ligne 55 - ligne 65; figures 9A,6 * ----- | 1,9 | |

**DOMAINES TECHNIQUES RECHERCHES (Int.Cl.7)**

H04N

Le présent rapport a été établi pour toutes les revendications

| Lieu de la recherche | Date d'achèvement de la recherche | Examinateur |
|---|---|---|
| LA HAYE | 20 mars 2002 | Bequet, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 3217

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-03-2002

| Document brevet cité au rapport de recherche | | Date de publication | Membre(s) de la famille de brevet(s) | | Date de publication |
|---|---|---|---|---|---|
| GB 2330905 | A | 05-05-1999 | US | 6246436 B1 | 12-06-2001 |
| | | | DE | 19836356 A1 | 12-05-1999 |
| | | | JP | 11214738 A | 06-08-1999 |
| US 5742058 | A | 21-04-1998 | FR | 2735632 A1 | 20-12-1996 |
| | | | DE | 69606098 D1 | 17-02-2000 |
| | | | DE | 69606098 T2 | 31-08-2000 |
| | | | EP | 0749233 A1 | 18-12-1996 |

EPO FORM P0460

Pour tout renseignement concernant cette annexe : voir Journal Officiel de l'Office européen des brevets, No.12/82